# EUROPEAN PATENT SPECIFICATION

(11) **EP 1 116 427 B1**
(45) Date of publication and mention of the grant of the patent: **08.09.2004**
(21) Application number: 01200125.1
(22) Date of filing: 15.01.2001
(51) Int. Cl.: A01B 39/22

(54) **Weeding device**
Jätvorrichtung
Dispositif de sarclage

(30) Priority: 17.01.2000 NL 1014092
(43) Date of publication of application: 18.07.2001
(73) Proprietor: Machinefabriek Steketee B.V., 4436 RE Oudelande (NL); Kress & Co. GmbH, 71665 Vaihingen/Enz, OT Riet (DE)
(72) Inventor: Steketee, Jan Jacobus, 4438 AE Driewegen (NL)
(74) Representative: Voigt, Wolf-Rüdiger

(56) References cited:
- EP-A- 0 112 800
- DE-B- 2 810 221
- GB-A- 878 169
- US-A- 2 758 529
- US-A- 3 212 585
- US-A- 5 076 180

## Description

The invention relates to a weeding device, comprising a frame displaceable over a field and having suspended therefrom at least one weeding implement consisting of a rotatable disk shaped body which is provided with a plurality of drive pins protruding at an angle to the plane of the body, and a plurality of protruding weeding members. Such a weeding device is known and is marketed by applicant under the name "Finger Weeder".

In the known weeding device the weeding implement is formed by a rotatable disc which is provided in the centre with a protruding shaft which is received in a bearing mounted on the end of a support arm. The support arm is arranged for adjustment in many ways in a frame which, as seen in the direction of displacement, can be suspended in front of or behind an agricultural tractor or other ground working apparatus, in particular a hoeing element. The support arm, or in any case the bearing mounted thereon, is placed at an angle to the horizontal, whereby the disc lies at an angle relative to the ground from which the weeds must be removed. The disc is further provided with drive pins and weeding fingers. The drive pins protrude at an angle from the plane of the disc and are intended for placing into the ground so that the disc is rotated when the tractor moves the frame over the field. The weeding fingers lie practically in the plane of the disc and extend practically radially from the periphery of the disc at regular angular distances. The dimensions of the weeding fingers are such that they also contact the ground and tend to dig themselves in.

The disc and the drive pins are formed (optionally integrally) from metal, while the weeding fingers are formed by relatively short protrusions or pins likewise manufactured from metal onto which are pushed or clamped the hollow ends of slender elements which are manufactured from rubber or other relatively flexible material and which form the actual fingers.

The operation of the known weeding device is based on the difference in the development of the weeds and the crop. As the frame is displaced over the field the disc, as stated, is rotated by the drive pins being pushed into the ground. The weeding fingers herein strike against the ground but do not penetrate therein, or hardly so, as a consequence of the flexibility of the material used. Instead the fingers bend and brush with force along the ground or the crop row, whereby weeds standing in the path of the weeding fingers are swept away. Crop plants with which the weeding fingers make contact will remain standing because they have already grown further and are therefore rooted more firmly in the ground.

The known weeding device has the drawback that it can be used only for particular combinations of crop and weed and only in particular conditions because the length, form and flexibility of the weeding fingers are ideal only for this combination. When other combinations, for instance weeds between younger crop plants, have to be treated, the weeding fingers have to be replaced by fingers of different form or manufactured from a different material. For this purpose the fingers have to be pulled individually from the pins on the rim of the disc and replaced. This is very labour-intensive.

Another drawback of the known weeding device is that the first manufacture of the disc with the fingers placed thereon is also time-consuming and therefore costly, while the fingers moreover come loose or break off relatively easily at the transition from the hollow to the solid part thereof. In addition, the fingers used are still too aggressive for many applications, which can result in damage to the crop plants.

The invention therefore has for its object to propose a weeding device of the above described type wherein these drawbacks do not occur. This is achieved according to the invention in that at least a part of the weeding members is fastened to an auxiliary body which is releasably connected to the rotatable body.

It should be noted that DE-B-28 10 221 discloses a device for pushing seeds into the ground which includes pairs of rotatable wheels arranged in a V-shape, each wheel having a plurality of protruding pushing fingers intermeshing at the bottom of the "V". These pushing fingers, which may be made of rubber or plastic, may be formed integrally with their respective wheel, which is fixed to a hub. This known device is not intended for weeding, and does not include any separate drive means.

In US-A-5 076 180 a trash cleaning brush unit for use ahead of a planter unit is disclosed including a pair of circular brushes mounted to a vertical support bar and angularly inclined toward one another. Each brush includes a mounting ring provided with bristles extending from its periphery. The mounting ring is mounted on a rotatable hub secured to the support bar. This prior art device is not intended for weeding either, and again does not include any drive means.

The weeding members are preferably embodied as fingers and formed integrally with the auxiliary body. The weeding fingers and the auxiliary body can advantageously be manufactured here from a rubber or elastomer. According to one aspect of the invention the weeding fingers and the auxiliary body are moulded into their final form, while according to another aspect of the invention they are cut and/or punched into their final form.

According to another embodiment of the invention the weeding members are embodied as brushes. Such brushes, the bristles of which are more flexible and thus less aggressive than fingers, are particularly suitable for application with relatively young and/or vulnerable crops.

A weeding device which is quick and simple to convert is obtained when the auxiliary body is connected to the rotating body by a single, centrally placed mounting element placed in a central opening of the auxiliary body.

In order to give support to the auxiliary body when this is made of the same slightly flexible material as the weeding fingers, the auxiliary body may be connected to the rotating body by a rigid retaining plate.

The invention also relates to a weeding implement for application in a weeding device as described above.

The invention will now be elucidated on the basis of two embodiments, wherein reference is made to the annexed drawing, in which:

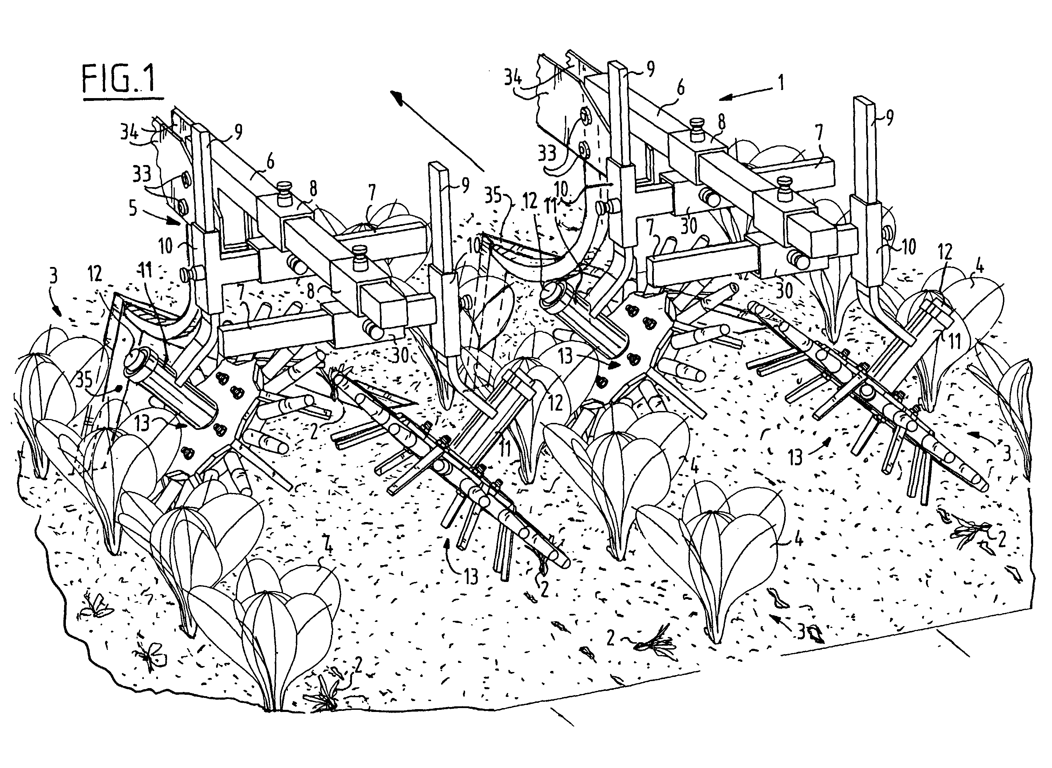

Fig. 1 shows a perspective view of the weeding device according to a first embodiment of the invention during use,

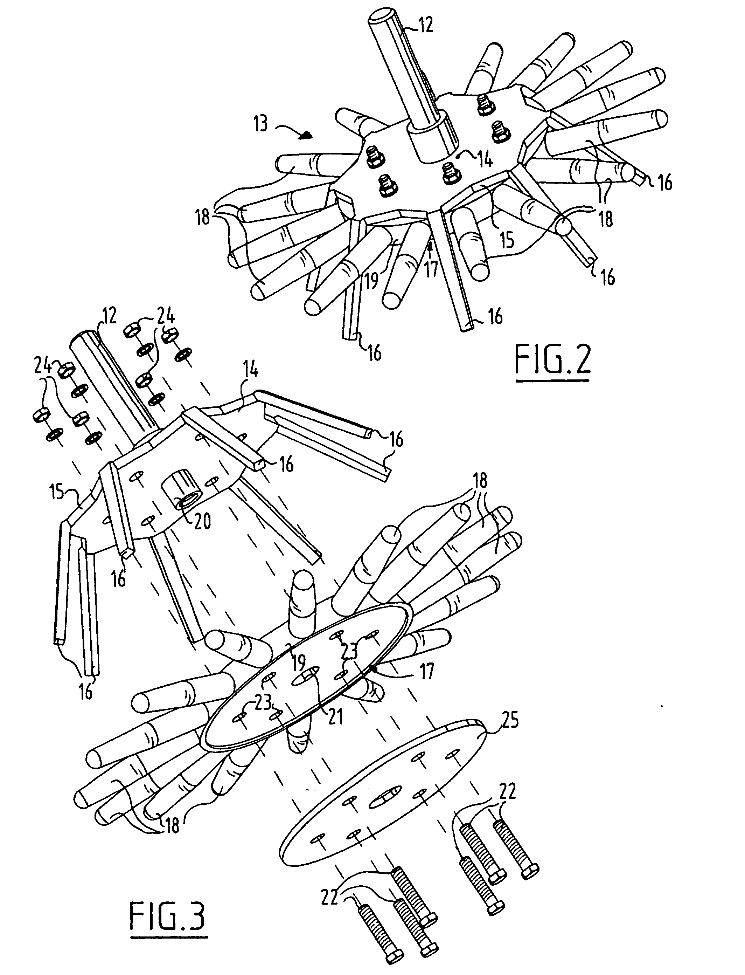

Fig. 2 shows a perspective top view of a weeding implement such as is applied in the weeding device of fig. 1,
Fig. 3 is a perspective bottom view with exploded parts of the weeding implement of fig. 2, and

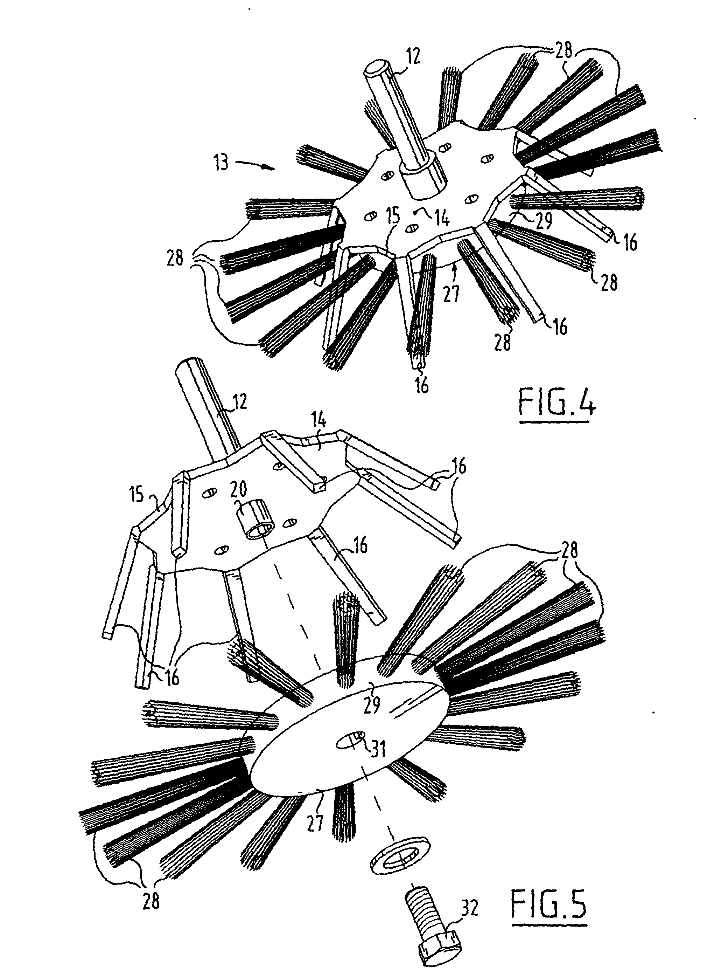

Fig. 4 and 5 show views corresponding with fig. 2 and 3 of another embodiment of the weeding implement.

A device 1 for removing weed plants 2 standing between crop plants 4 in crop rows 3 consists of a frame 5 which, as seen in the direction of displacement, can be suspended in front of or behind an agricultural tractor or other ground working apparatus.

In the embodiment shown here two weeding devices 1 are fastened by means of bolts 33 to connecting parts 34 of a hoeing element, the actual hoeing blades 35 of which are partially shown. Instead of the shown rigid fastening with two bolts 33, frames 5 could also be fixed with a single bolt 33, whereby they would be pivotable, and the weeding devices 1 could follow the contour of the field.

Each frame 5 is formed in the shown embodiment by a longitudinal carrier 6 which protrudes to the rear as seen in the direction of movement and on which in each case two transversely protruding support arms 7 are arranged slidably via sleeves 8. These transverse support arms 7, which are also slidable in sleeves 30, in turn each carry a vertical arm 9 which is also slidable in a guide 10. Fixed on the end of each vertical arm 9, which is slightly curved, is a bearing bush 11 in which a rotation shaft 12 of a weeding member 13 is received.

Weeding member 13 consists of a disc-shaped body 14 on which the rotation shaft 12 is mounted and which is provided on its peripheral edge 15 with a number of drive pins 16 arranged at regular intervals and protruding at an angle to the plane of body 14. In the shown embodiment the disc-shaped body 14 and drive pins 16 are formed integrally and manufactured from a relatively wear-resistant material such as steel or iron.

On the side of disc-shaped body 14 remote from rotation shaft 12 is fixed a likewise disc-shaped auxiliary body 17 which is provided with a number of weeding members 18 lying in the plane thereof and extending in radial direction from the peripheral edge 19. These weeding members 18 are embodied as fingers and are manufactured from a slightly flexible material such as rubber or an elastomer. In the shown embodiment the weeding fingers 18 are formed integrally with auxiliary body 17, whereby welds or other connections are avoided. A strong connection is hereby obtained, while the manufacture from one piece can moreover take place much more quickly and easily than the fixing of a large number of separate weeding fingers 18 to auxiliary body 17. Disc 17 and fingers 18 can herein be moulded in the shown form in a mould or can be cut or punched from a larger disc.

In the shown embodiment the auxiliary body 17 is centred on drive body 14 by a protrusion 20 which lies in the line of rotation shaft 12 and which is placed in a central opening 21 of auxiliary body 17. Use is made here to fasten auxiliary body 17 to drive body 14 of a number of bolts 22 which extend through apertures 23 in auxiliary body 17 and co-act with nuts 24. In order to give some support to the auxiliary body 17, which is after all manufactured from the same slightly flexible material as weeding fingers 18, body 17 is fixed against the drive body by a rigid retaining plate 25, for instance of metal. Instead of a single retaining plate 25, use could be made to support and fix auxiliary body 17 of flat, relatively wide rings which could be placed round each of the bolts 22.

In a variant of the invention the auxiliary body 17 is formed by a disc provided on its periphery with openings into which brush-like weeding members are fixed. These brushes 28 can be manufactured from a relatively wear-resistant type of plastic, such as for instance nylon. Because brushes 28 are more flexible than the rubber fingers 18 as a result of the small thickness of the bristles, they are particularly suitable for application in the case of relatively young and/or vulnerable crop plants. In this embodiment the auxiliary body 27 is fastened to drive body 14 by means of a single central bolt 32 which is tightened into the protrusion 20 provided with screw thread. Such a fastening with a single bolt can of course be loosened and tightened comparatively quickly, whereby auxiliary body 27 can be replaced rapidly and simply. In addition, if auxiliary body 27 were manufactured from a slightly flexible material use could advantageously then be made of the inherent flexibility of auxiliary body 27 due to the central mounting.

The operation of weeding device 1 is thus as follows. Once the frame 5 has been suspended on a tractor or other agricultural machine and set to the correct height, the weeding implements are set to the correct position and in the correct orientation by sliding the different arms 7, 9. Drive bodies 12 and the auxiliary bodies 17, 27 connected thereto will herein be directed at an angle to the ground as a consequence of the curvature of the end part of vertical arm 9. Drive pins 16 herein pierce the ground, while the ends of weeding members 18, 28 also make contact with the ground but are then bent as a result of their inherent flexibility.

If frame 5 is now displaced over the field, drive bodies 14 are then rotated by the pins 16 pushing into the ground. Auxiliary bodies 17 with the weeding members 18, 28 fastened thereto herein co-rotate, wherein the ends of weeding members 18, 28 bend when they touch the ground and sweep as it were along the crop row 3. Weeding members 18, 28 herein come into contact with both crop plants 4 and weeds 2. Because the weeds are smaller and less well rooted in crop row 3 than crop plants 4, they are swept away by weeding members 18, 28 while plants 4 remain standing. Weeds can thus be removed in very efficient manner without use having to be made for this purpose of chemical herbicides.

When weeds have to be removed in this way in a different crop, it is possible to suffice simply by for instance replacing auxiliary bodies 17 and weeding fingers 18 with auxiliary bodies 27 and weeding brushes 28. Weeding members of other shape and dimensions can also be applied.

The invention thus provides a mechanical weeding device which can be manufactured more simply and at less cost than known devices, the weeding members of which are stronger and which can be modified quickly and easily to any possible combination of crop, weed and soil type.

Although the invention is described above with reference to a number of embodiments, it will be apparent that it is not limited thereto. Weeding implements 13 could for instance be suspended directly from the frame of another agricultural machine, for instance a hoeing element, so that a separate frame would be unnecessary. Weeding members other than the shown flexible fingers 18 or plastic brushes 28 could also be used. More aggressive weeding members such as steel wire brushes could for instance also be applied in the case of woody crops such as in the forestry sector, while comparatively stiff, for instance wooden weeding fingers could perhaps be envisaged for other applications. The scope of the invention is therefore defined solely by the appended claims.

## Claims

1. Weeding device (1), comprising a frame (5) displaceable over a field and having suspended therefrom at least one weeding implement (13) consisting of a rotatable disk-shaped body (14) which is provided with a plurality of drive pins (16) protruding at an angle to the plane of the disk-shaped body (14) and a plurality of practically radially protruding weeding members lying practically in the plane of the disk-shaped body (14) (18;28), **characterized in that** at least a part of the weeding members (18;28) is fastened to an auxiliary body (17) which is releasably connected to the rotatable body (14).

2. Weeding device (1) as claimed in claim 1, **characterized in that** the weeding members (18) are embodied as fingers and formed integrally with the auxiliary body (17).

3. Weeding device (1) as claimed in claim 2, **characterized in that** the weeding fingers (18) and the auxiliary body (17) are manufactured from a rubber or elastomer.

4. Weeding device (1) as claimed in claim 3, **characterized in that** the weeding fingers (18) and the auxiliary body (17) are moulded into their final form.

5. Weeding device (1) as claimed in claim 3, **characterized in that** the weeding fingers (18) and the auxiliary body (17) are cut and/or punched into their final form.

6. Weeding device (1) as claimed in claim 1, **characterized in that** the weeding members (28) are embodied as brushes.

7. Weeding device (1) as claimed in any of the foregoing claims, **characterized in that** the auxiliary body (17) is connected to the rotating body (14) by a single, central mounting element (20) placed in a central opening (21;31) of the auxiliary body (17).

8. Weeding device (1) as claimed in any of the foregoing claims, **characterized in that** the auxiliary body (17) is connected to the rotating body (14) by a rigid retaining plate (25).

9. Weeding implement (13), evidently intended for application in a weeding device (1), as claimed in any of the foregoing claims.

## Patentansprüche

1. Jäteinrichtung (1), bestehend aus einem über einem Feld beweglichen Rahmen (5) mit zumindest einem an ihm aufgehängten Jätwerkzeug (13), das aus einem scheibenförmigen, drehbaren Körper (14) besteht, der mit einer Vielzahl von winkelig zur Ebene des scheibenförmigen Körpers (14) angeordneten Antriebsstiften (16) sowie einer Vielzahl von praktischerweise radial herausragenden Jätgliedern (18, 28), die praktischerweise in der Ebene des scheibenförmigen Körpers (14) liegen, ausgestattet ist, **gekennzeichnet dadurch, daß** zumindest ein Teil der Jätglieder (18, 28) an einem Zusatzkörper (17), der lösbar mit dem drehbaren Körper (14) verbunden ist, befestigt ist.

2. Jäteinrichtung (1) nach Anspruch 1, **gekennzeichnet dadurch, daß** die Jätglieder (18) als Finger ausgebildet sind und Teil des Zusatzkörpers (17) bilden.

3. Jäteinrichtung (1) nach Anspruch 2, **gekennzeichnet dadurch, daß** die Jätfinger (18) wie auch der Zusatzkörper (17) aus einem Kautschukmaterial oder Elastomer gefertigt sind.

4. Jäteinrichtung (1) nach Anspruch 3, **gekennzeichnet dadurch, daß** die Jätfinger (18) wie auch der Zusatzkörper (17) in ihre endgültige Form gepreßt wurden.

5. Jäteinrichtung (1) nach Anspruch 3, **gekennzeichnet dadurch, daß** die Jätfinger (18) wie auch der Zusatzkörper (17) in ihre endgültige Form spanabhebend gearbeitet und/oder gestanzt wurden.

6. Jäteinrichtung (1) nach Anspruch 1, **gekennzeichnet dadurch, daß** die Jätglieder (28) als Bürsten ausgebildet sind.

7. Jäteinrichtung (1) nach einem der vorhergehenden Ansprüche, **gekennzeichnet dadurch, daß** der Zusatzkörper (17) mit dem Drehkörper (14) über ein einfaches, mittig angeordnetes Montageelement (20), das in einer mittig angeordneten Öffnung (21, 31) im Zusatzkörper (17) untergebracht ist, verbunden ist.

8. Jäteinrichtung (1) nach einem der vorhergehenden Ansprüche, **gekennzeichnet dadurch, daß** der Zusatzkörper (17) mit dem Drehkörper (14) über ein starres Rückhalteblech (25) verbunden ist.

9. Jätwerkzeug (13), augenscheinlich für den Einsatz in einer Jäteinrichtung (1) vorgesehen, nach einem der vorhergehenden Ansprüche.

## Revendications

1. Dispositif de sarclage (1) se déplaçant au-dessus d'un champ constitué d'un cadre (5) sur lequel est suspendu au moins un outil de sarclage (13) qui consiste en un corps rotatif (14) en forme de disque, étant équipé d'un grand nombre de chevilles d'entraînement (16) disposées de façon angulaire au plan du corps en forme de disque (14) ainsi que d'un grand nombre d'éléments sarcleurs (18, 28) qui ressortent radialement de manière appropriée et se trouvent de manière appropriée dans le plan du corps en forme de disque (14), **Caractérisé par le fait qu'**au moins une partie des éléments sarcleurs (18, 28) est fixée à une pièce supplémentaire (17) reliée de manière détachable au corps rotatif (14).

2. Dispositif de sarclage (1) selon revendication 1 **Caractérisé par le fait que** les éléments sarcleurs (18) sont en forme de doigts et font partie de la pièce supplémentaire (17).

3. Dispositif de sarclage (1) selon revendication 2 **Caractérisé par le fait que** les doigts de sarclage (18) ainsi que la pièce supplémentaire (17) sont faits en matière caoutchoutée ou en élastomère.

4. Dispositif de sarclage (1) selon revendication 3 **Caractérisé par le fait que** les doigts de sarclage (18) ainsi que la pièce supplémentaire (17) ont été pressés dans leur forme définitive.

5. Dispositif de sarclage (1) selon revendication 3 **Caractérisé par le fait que** les doigts de sarclage (18) ainsi que la pièce supplémentaire (17) ont été usinés dans leur forme définitive par enlèvement de copeaux et/ou emboutis.

6. Dispositif de sarclage (1) selon revendication 1 **Caractérisé par le fait que** les éléments sarcleurs (28) sont en forme de brosses.

7. Dispositif de sarclage (1) selon les revendications précédentes **Caractérisé par le fait que** la pièce supplémentaire (17) est reliée au corps rotatif (14) par un élément de montage (20) simple disposé centriquement lequel est relié à la pièce supplémentaire (17) dans une ouverture (21, 31) disposée au centre.

8. Dispositif de sarclage (1) selon les revendications précédentes **Caractérisé par le fait que** la pièce supplémentaire (17) est reliée au corps rotatif (14) par une tôle de retenue (25) rigide.

9. Outil de sarclage (13) prévu visiblement pour l'utilisation dans un dispositif de sarclage (1) selon une des revendications précédentes.
